(19) Europäisches Patentamt
European Patent Office
Office européen des brevets

(11) Veröffentlichungsnummer: **0 296 111 B1**

(12) **EUROPÄISCHE PATENTSCHRIFT**

(45) Veröffentlichungstag der Patentschrift: **24.11.93**

(51) Int. Cl.[5]: **C09B 67/08**, C08K 9/02, //C09D7/12,C09D11/02

(21) Anmeldenummer: **88810386.8**

(22) Anmeldetag: **10.06.88**

(54) **Mit Metalloxiden beschichtete organische Pigmente.**

(30) Priorität: **16.06.87 CH 2256/87**

(43) Veröffentlichungstag der Anmeldung:
**21.12.88 Patentblatt 88/51**

(45) Bekanntmachung des Hinweises auf die Patenterteilung:
**24.11.93 Patentblatt 93/47**

(84) Benannte Vertragsstaaten:
**CH DE FR GB IT LI**

(56) Entgegenhaltungen:
**EP-A- 0 057 388**
**DE-B- 1 169 060**
**FR-A- 2 257 642**
**NL-A- 7 207 051**

(73) Patentinhaber: **CIBA-GEIGY AG**
**Klybeckstrasse 141**
**CH-4002 Basel(CH)**

(72) Erfinder: **Bugnon, Philippe, Dr.**
**La Chenalyete**
**CH-1724 Essert(CH)**
Erfinder: **Grubenmann, Arnold, Dr.**
**Chemin des Cossettes 1**
**CH-1723 Marly(CH)**
Erfinder: **Medinger, Bernhard, Dr.**
**Grottenweg**
**CH-1711 Giffers(CH)**
Erfinder: **Schaeflé, Jean, Dr.**
**Rue des Carrières 20**
**F-68100 Mulhouse(FR)**

EP 0 296 111 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft organische Pigmente, deren Teilchenoberfläche mit einem festhaftenden, über eine hydroxylgruppenhaltige Zwischenschicht fixierten Ueberzug aus Metalloxiden versehen ist. Sie zeichnen sich durch hervorragende Eigenschaften, insbesondere durch ein sehr gutes rheologisches Verhalten, aus.

Die Beschichtung von festen Materialien mit einer Metalloxid-Schutzschicht, insbesondere aus Silicium- und/oder Aluminiumoxid, ist allgemein bekannt und beispielsweise in den US-Patenten 2 885 366 und 3 485 658 beschrieben. In der ersten der obengenannten Patentschriften wird z.B. die Beschichtung von Rutil mit Siliciumoxid spezifisch erwähnt. Dass durch Beschichtung der Teilchenoberfläche von anorganischen Pigmenten, insbesondere Bleichromaten, mit Siliciumoxid, gegebenenfalls in Kombination mit Aluminiumoxid, deren Eigenschaften verbessert werden können, ist z.B. aus den US-Patenten 3 370 971, 3 470 007 und 3 639 133 bekannt. Wie aus den japanischen Offenlegungsschriften 75/51527, 76/74039 und 79/160433 hervorgeht, wurden auch organische Pigmente mit Siliciumoxid beschichtet und aus der niederländischen Patentanmeldung 72/7051 sind organische Pigmente mit einem Ueberzug aus Siliciumoxid und wasserlöslichen Metallsalzen von z.B. $Sn^{4+}$, $Ti^{4+}$ oder $Zr^{4+}$ bekannt. Die damit erzielten Resultate sind allerdings nicht immer befriedigend, den insbesondere in Lösungsmittelsystemen, wie z.B. Lacken, werden diese Beschichtungen leicht abgelöst.

Aus EP-A-57 388 und US-Patent 4 139 660 ist bekannt, dass man die Oberflächenspannung und damit die Benetzbarkeit von festen Substraten durch Behandlung mit metallorganischen Verbindungen oder Salzen von Elementen der IV. Haupt- oder Nebengruppe des Periodensystems verbessern kann. Im US-Patent 4 139 660 wird ausdrücklich darauf hingewiesen, dass dabei keine Hydrolyse stattfinden soll. Die DE-OS 2 501 251 beschreibt eine Farbstoffzusammensetzung für Polyethylen, die aus eine organische Silanverbindung und/oder eine organische Titanverbindung enthaltenden organischen Pigmenten besteht. Aus dem US-Patent 3 025 173 ist ein Verfahren zum Ueberziehen von Pigmentpartikeln mit Titanhydrat bekannt. Aber auch die nach diesen Methoden erhaltenen Pigmentzusammensetzungen vermögen nicht ganz zu befriedigen, da diese Ueberzüge, z.B. in Lacken, insbesondere in "High Solid"-Systemen mit Zusätzen von "Hyperdispersants" (vgl. J.S. Hampton, J.F. Mac Millan, American Ink Maker, Jan. 1985, S. 16 ff), die heute vermehrt zum Einsatz kommen, leicht abgelöst werden.

Ganz gegen Erwartung ist nun gefunden worden, dass gerade die bisher unerwünschte Hydrolyse nötig ist, um dieses Problem zu lösen und dass organische Pigmente mit einem festhaftenden Ueberzug aus Silicium- oder Aluminiumoxid erhalten werden können, wenn der genannte Ueberzug über eine hydroxylgruppenhaltige Zwischenschicht aus partiell hydrolysierten Chelaten oder Alkylestern der Säuren von Elementen der Gruppen 4A oder 4B des Periodensystems[1] an die Teilchenoberfläche des Pigments fixiert wird. Die obenerwähnten, den bisher bekannten Pigmentzusammensetzungen dieser Art anhaftenden Nachteile werden dadurch beseitigt.

Die vorliegende Erfindung betrifft demnach Stoffzusammensetzungen enthaltend ein mit Metalloxiden beschichtetes organisches Pigment, dadurch gekennzeichnet, dass die Teilchenoberfläche des Pigments mit einem festhaftenden, durchgehenden, hochvernetzten Ueberzug aus Silicium- und/oder Aluminiumoxid versehen ist, welcher durch Polykondensation eines Silicates und/oder Aluminates mit den freien Hydroxylgruppen einer die Teilchenoberfläche durchgehend umhüllenden Schicht fixiert wird, die im wesentlichen aus partiell hydrolysierten organischen Verbindungen von Elementen der Gruppe 4A oder 4B des Periodensystems, ausgewählt aus der Gruppe bestehend aus Chelaten der Formel

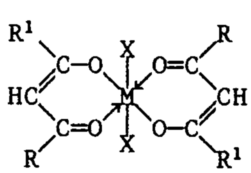

(I)

oder

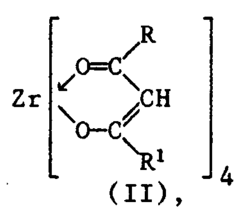

(II),

worin R Methyl, Ethyl, Methoxy oder Ethoxy, $R^1$ Methyl oder Ethyl und X Halogen oder $C_1$-$C_4$-Alkoxy sind und M Ti oder Sn bedeutet, und aus Estern der Formel

[1] Grant & Hackh's Chemical Dictionary, fifth edition, 1987

$Q(OR^2)_4$ (III) ,

worin Q ein Element der Gruppe 4A oder 4B des Periodensystems und $R^2$ $C_1$-$C_4$-Alkyl bedeuten, besteht.

R ist bevorzugt Methyl oder Ethoxy und $R^1$ ist vorzugsweise Methyl.

X bedeutet als Halogen z.B. Brom, Jod und insbesondere Chlor.

Als $C_1$-$C_4$-Alkoxy bedeutet X z.B. Methoxy, Ethoxy , n-Propoxy, Isopropoxy, n-Butoxy, sec.-Butoxy oder tert.-Butoxy.

In Formel I bedeutet X, wenn M Ti ist, bevorzugt $C_1$-$C_4$-Alkoxy, insbesondere Isopropoxy.

In Formel I bedeutet X, wenn M Sn ist, bevorzugt Halogen, insbesondere Chlor.

$R^2$ bedeutet als $C_1$-$C_4$-Alkyl z.B. Methyl, Ethyl, n-Propyl, Isopropyl, n-Butyl, sec.-Butyl oder tert.-Butyl und ist bevorzugt Ethyl, n-Propyl, Isopropyl oder n-Butyl.

Q ist beispielsweise Sn, Si, Pb, Ge, Ti oder Zr. Bevorzugt ist Q Si, Ti oder Zr.

Verbindungen der Formel II sind bevorzugt.

Im Falle eines Ueberzuges mit Siliciumoxid erfolgt die Polykondensation mit Silicaten über die sogenannte "aktive Kieselsäure", deren Beschaffenheit und Herstellung z.B. in den US-Patenten 3 370 971 und 3 639 133 beschrieben ist. Bevorzugt geht man von Kieselsäure, Metasilicaten oder insbesondere von handelsüblichem Na-Wasserglas aus.

Im Falle eines Ueberzuges mit Aluminiumoxid erfolgt die Polykondensation über in situ aus einem Aluminat gebildetes Aluminiumoxid. Letzteres kann z.B. direkt aus einem wasserlöslichen Na-, K- oder Mg-Aluminat in Gegenwart von verdünnter Mineralsäure, bei einem pH-Wert zwischen 5 und 10, oder aus wässrigem Aluminiumsulfat durch Einstellung des pH-Wertes zwischen 5 und 7 erhalten werden. Bevorzugt verwendet man Natriumaluminat oder Aluminiumsulfat.

Bei Verwendung eines Aluminats erhält man bei pH 5-7 dichtes, weitgehend amorphes Aluminiumoxid (sogenanntes "dense alumina") und bei pH 7-10 weitgehend kristallines Aluminiumoxid (sogenanntes "Boehmit").

Es kann auch sowohl eine $SiO_2$- als auch eine $Al_2O_3$-abgebende Substanz (ausgewählt aus den oben beschriebenen) oder ein Gemisch von beiden eingesetzt werden und damit ein gemischter Ueberzug von Silicium-und Aluminiumoxid gebildet werden.

Alle üblichen organischen Pigmente, wie beispielsweise Azopigmente, Chinacridone, Phthalocyanine, Indanthrone, Flavanthrone, Pyranthrone, Perylene, Dioxazine, Perinone, Thioindigo, Chinophthalone und insbesondere Diketo-pyrrolopyrrole, Isoindoline, Isoindolinone und Metallkomplexe, eignen sich zur Herstellung der erfindungsgemässen Stoffzusammensetzungen, die beispielsweise wie nachstehend beschrieben erfolgt.

Das organische Pigment wird nach üblichen Methoden in Wasser oder einem Niederalkylalkohol (z.B. Methyl-, Ethyl-, n-Propyl-, Isopropyl-, n-Butyl-, sec.-Butyl, tert.-Butyl- oder Amylalkohol) dispergiert. Dieser Suspension fügt man zweckmässig 1-15, bevorzugt 2-7 Gew.-%, bezogen auf das Pigment, einer Verbindung der Formel I, II oder III, jeweils als Oxid berechnet, in Pulverform oder als Lösung zu.

Das Gemisch wird im allgemeinen mindestens eine Stunde bei Temperaturen zwischen 20 und 50 °C gerührt. Der pH liegt je nach eingesetztem Reagenz zwischen 2 und 6. Durch Zugabe einer Base wird der pH um mindestens zwei Einheiten erhöht und damit die partielle Hydrolyse eingeleitet. Als Basen kommen zweckmässig anorganische sowie organische Verbindungen, z.B. Natronlauge, Kalilauge, Ammoniak, Natriumalkoholat, Kaliumalkoholat oder Pyridin in Frage. Die Hydrolyse kann auch durch Erhöhung der Temperatur eingeleitet werden. Danach wird bei einer Temperatur zwischen 50 und 80 °C weitergerührt, wobei der pH allmählich absinkt. Sobald der pH stabil ist (je nach Temperatur und Reagenzien 1-20 Stunden), wird abgekühlt, filtriert und mit Wasser gewaschen.

Das so erhaltene wasserfeuchte Produkt wird in Wasser suspendiert. Es genügt aber auch nach der Hydrolyse, ohne das Produkt zu isolieren, die Suspension mit mindestens der gleichen Menge Wasser zu verdünnen.

Die Suspension wird unter Rühren auf 60-100 °C erhitzt und mit 0,5-50, bevorzugt 1-25 und besonders bevorzugt 2-12 Gew.-%, aktiver Kieselsäure oder in situ gebildetem Aluminiumoxid versetzt. Es wird 2 bis 6 Stunden weitergerührt, dann neutralisiert und abfiltriert. Der Rückstand wird mit Wasser gewaschen und im Vakuumtrockenschrank bei 80-120 °C getrocknet.

Aktive Kieselsäure erhält man beispielsweise dadurch, dass man die auf 60-100 °C erwärmte Suspension mit einer der bereits oben erwähnten anorganischen oder organischen Basen auf pH 7-10 einstellt und dann langsam innerhalb einer Stunde miteinander Na-Wasserglas und Schwefelsäure in der gewünschten Menge zufügt und dabei beachtet, dass der pH immer im alkalischen Bereich liegt.

In situ gebildetes $Al_2O_3$ erhält man z.B. dadurch, dass man in die auf 60-100 °C erwärmte Suspension langsam entweder eine Natriumaluminat-Lösung bis zum pH 5-9 zugibt und den pH durch Zugabe von Schwefelsäure konstant hält, oder eine Aluminiumsulfat-Lösung bis zum pH 5-7 hinzufügt, und den pH durch Zugabe von Natronlauge in diesem Bereich hält.

Es ist auch gefunden worden, dass bereits der erste Ueberzug mit einer partiell hydrolysierten Verbindung der Formel I, II oder III sehr fest haftet und dem Produkt schon ganz überraschend gute Eigenschaften, insbesondere bezüglich rheologischen Verhaltens, verleiht.

Stoffzusammensetzungen enthaltend ein organisches Pigment, dessen Teilchenoberfläche mit einer durchgehend umhüllenden Schicht überzogen ist, die im wesentlichen aus partiell hydrolysierten organischen Verbindungen von Elementen der Gruppe 4A oder 4B des Periodensystems, ausgewählt aus der Gruppe bestehend aus Chelaten der Formel

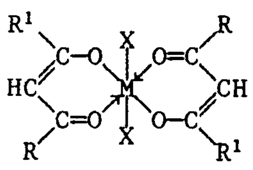

(I)

oder

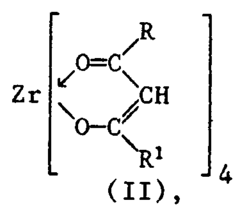

(II),

worin R Methyl, Ethyl, Methoxy oder Ethoxy, $R^1$ Methyl oder Ethyl und X Halogen oder $C_1$-$C_4$-Alkoxy sind und M Ti oder Sn bedeutet, und aus Estern der Formel

$Q(OR^2)_4$ (III) ,

worin Q ein Element der Gruppe 4A oder 4B des Periodensystems und $R^2$ $C_1$-$C_4$-Alkyl bedeuten, besteht, sind ebenfalls neu, und bilden deshalb einen weiteren Gegenstand der Erfindung.

Man erhält sie wie oben beschrieben, indem man die Suspension nach der Hydrolyse, sobald der pH stabil ist, abkühlt, filtriert, den Rückstand mit Wasser wäscht und im Vakuumtrockenschrank bei 80-120 °C trocknet.

Verbindungen der Formel II sind bevorzugt.

Die erfindungsgemässen Stoffkompositionen eignen sich als Pigmente zum Färben von hochmolekularem organischem Material.

Hochmolekulare organische Materialien, die mit den erfindungsgemässen Stoffzusammensetzungen gefärbt bzw. pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen auch in Frage, wie z.B. Leinölfirnis, Nitrocellulose, Alkydharze, Phenolharze, Melaminharze, Acrylharze und Harnstoff-Formaldehydharze.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Stoffzusammensetzungen als Toner oder in Form von Präparaten einzusetzen. Bezogen auf das zu pigmentierende hochmolekulare organische Material kann man die erfindungsgemässen Stoffzusammensetzungen in einer Menge von 0,01 bis 30 Gew.%, vorzugsweise von 0,1 bis 10 Gew.%, einsetzen.

Die Pigmentierung der hochmolekularen organischen Substanzen mit den erfindungsgemässen Stoffzusammensetzungen erfolgt beispielsweise derart, dass man eine solche Stoffzusammensetzung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Stoffzusammensetzungen

in die Polymeren eingearbeitet werden. Es ist ferner möglich, zwecks Erzielung verschiedener Farbtöne den hochmolekularen, organischen Stoffen neben den erfindungsgemässen Stoffzusammensetzungen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Stoffzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie z.B. hohe Transparenz, gute Ueberlackier-, Migrations-, Hitze-, Licht- und Wetterbeständigkeit, aus.

Die erfindungsgemässen Stoffzusammensetzungen und im allgemeinen besonders diejenigen mit Pigmenten, die auch den Silicium- und/oder Aluminiumoxid-Ueberzug besitzen, zeichnen sich aber ganz besonders durch ein hervorragendes rheologisches Verhalten in Lack- und Druckfarbensystemen, durch hohen Glanz und ausgezeichnetes "DOI" (= distinctness of image) der damit erhaltenen Lackierungen und durch weitgehende Verzugsfreiheit der damit pigmentierten Kunststoff-Formteile aus.

Infolge der guten rheologischen Eigenschaften der erfindungsgemässen Stoffzusammensetzungen ist es möglich, Lacke hoher Pigmentkonzentration (high loadings) herzustellen.

Die erfindungsgemässen Stoffzusammensetzungen eignen sich vorzugsweise zum Färben von wässrigen und/oder lösungsmittelhaltigen Lacken, insbesondere Automobillacken. Ganz besonders bevorzugt ist ihre Verwendung für Metalleffektlackierungen.

Die nachfolgenden Beispiele dienen zur Erläuterung der Erfindung. Sofern nichts anderes vermerkt, bedeuten Prozente Gewichtsprozente.

Ueberzug mit hydrolysierten Verbindungen der Formel I, II oder III

Beispiel 1: 50 g des Isoindolinonpigments C.I.Pigment Gelb 110 werden in 620 g Wasser eingerührt und durch drei Passagen in einem Hochdruckhomogenisator (Gaulin Typ LAB 60® der Firma Schroeder APV) dispergiert. Zu der auf 50 °C erwärmten Dispersion werden unter Rühren 16 g Zirkonium-IV-acetylacetonat (= 7,4 % $ZrO_2$ bezogen auf Pigment) gegeben. Anschliessend lässt man auf Raumtemperatur abkühlen und rührt 6 Stunden lang nach. Man erwärmt erneut auf 65 °C und erhöht den pH durch Zugabe von ca. 70 ml 1n NaOH auf 8,7. Die Suspension wird 17 Stunden lang gerührt, wobei der pH allmählich auf 5,8 sinkt. Nach dem Abkühlen der Suspension wird das Produkt filtriert, mit Wasser gewaschen und in einem Vakuumtrockenschrank bei 80 °C getrocknet. Das erhaltene Pigment enthält 5,3 % Zr.

Beispiel 2: 20 g des Metallkomplexpigmentes C.I.Pigment Gelb 129 werden in 200 ml Wasser während vier Stunden mit einem Zahnscheibenrührer dispergiert. Zu der auf 50 °C erwärmten Dispersion werden 4 g Zirkonium-IV-acetylacetonat (= 5 % $ZrO_2$ bezogen auf Pigment) gegeben. Das Gemisch wird eine Stunde lang gerührt, dann auf 65 °C erwärmt und der pH wird auf 8,5 eingestellt. Die Suspension wird 16 Stunden gerührt. Während dieser Zeit sinkt der pH auf 5,4. Nach dem Abkühlen wird das Produkt abfiltriert, mit Wasser gewaschen und bei 80 °C im Vakuumtrockenschrank getrocknet.

Beispiel 3: Zu 200 g einer wie in Beispiel 1 beschrieben, mittels eines Hochdruckhomogenisators dispergierten 5 %igen wässrigen Suspension des Diketo-Pyrrolopyrrolpigments C.I.Pigment Rot 255 werden 2 g Zirkonium-IV-acetylacetonat (= 5 % $ZrO_2$ bezogen auf Pigment) gegeben. Man erhitzt während 15 Minuten auf 50 °C und rührt dann eine Stunde weiter. Der pH wird anschliessend von 4,9 auf 8,5 erhöht und die Temperatur auf 65 °C gebracht. Nach 2 1/2 Stunden liegt der pH bei 6,8. Das Produkt wird schliesslich wie in Beispiel 1 beschrieben isoliert.

Beispiel 4: 20 g C.I.Pigment Gelb 110 werden nach der in Beispiel 1 beschriebenen Methode anstatt in Wasser in 200 ml Isopropanol dispergiert. Innerhalb 30 Minuten werden 3,55 g Titan-IV-isopropylat (= 5 % $TiO_2$ bezogen auf Pigment), in 50 ml Isopropanol gelöst, zugegeben. Nach einer Stunde gibt man 10 ml einer 2 %igen Lösung von Na-Isopropylat in Isopropanol zu. Die Suspension wird auf 70 °C erhitzt und 3 Stunden lang weiter gerührt. Nach dem Abkühlen wird das Produkt wie in Beispiel 1 beschrieben isoliert.

Beispiel 5: 20 g C.I.Pigment Gelb 110 werden wie in Beispiel 4 in 200 ml Isopropanol dispergiert. Innerhalb 30 Minuten werden 2,57 g Zinn-IV-dichloro-acetylacetonat (= 5 % $SnO_2$ bezogen auf Pigment), in 50 ml Ethanol gelöst, zugegeben. Nach einer Stunde gibt man 20 ml einer 2 %igen Na-Isopropylatlösung in Isopropanol zu. Die Suspension wird auf 70 °C erhitzt und während 3 Stunden weitergerührt. Nach dem

Abkühlen wird das Produkt wie in Beispiel 1 beschrieben isoliert.

Beispiel 6: 20 g C.I.Pigment Gelb 110 werden wie in Beispiel 4 in 200 ml Isopropanol dispergiert. Innerhalb 30 Minuten werden 3,45 g Tetraethoxysilicat (= 5 % $SiO_2$ bezogen auf Pigment), in 50 ml Isopropanol gelöst, zugegeben. Nach einer Stunde gibt man 10 ml einer 2 %igen Na-Isopropylatlösung in Isopropanol zu. Die Suspension wird auf 70 °C erwärmt und während drei Stunden weitergerührt. Nach dem Abkühlen wird das Produkt wie in Beispiel 1 beschrieben isoliert.

Beispiel 7: 200 g eines 30%igen feuchten Presskuchens des Diketo-pyrrolopyrrolpigments C.I. Pigment Rot 255 werden nach der in Beispiel 1 beschriebenen Methode in 460 g Wasser dispergiert. Zu der auf 50 °C erwärmten Dispersion werden unter Rühren 11,85 g Zirkonium-IV-acetylacetonat (= 5 % $ZrO_2$ bezogen auf Pigment) gegeben. Anschliessend lässt man auf Raumtemperatur abkühlen und rührt 15 Stunden nach. Man erwärmt erneut auf 65 °C und erhöht durch Zugabe von 1n NaOH den pH auf 8,5. Die Suspension wird 4 Stunden gerührt, wobei der pH allmählich auf 5,8 sinkt.

Nach dem Abkühlen der Suspension werden 130 g derselben abfiltriert. Der Rückstand wird mit Wasser gewaschen und in einem Vakuumtrockenschrank bei 80 °C getrocknet.

Zusätzlicher Ueberzug mit Silicium- und/oder Aluminiumoxid

Beispiel 8:

a) 222,5 g C.I.Pigment Gelb 110 werden in 3077 g Wasser eingerührt und wie in Beispiel 1 beschrieben dispergiert. Zu 3000 g der auf 55 °C erwärmten Dispersion werden unter Rühren 24 g Zirkonium-IV-acetylacetonat (= 3 % $ZrO_2$ bezogen auf Pigment) gegeben. Anschliessend lässt man auf Raumtemperatur abkühlen und rührt 5 Stunden lang nach. Man erwärmt erneut auf 65 °C und erhöht durch Zugabe von 1n NaOH den pH auf 8,5. Die Suspension wird 16 Stunden lang gerührt, wobei der pH allmählich auf 5,7 sinkt.

b) Die Hälfte der Suspension wird erneut auf 90 °C erwärmt. Man gibt 20 g $Na_2SO_4$ hinzu, erhöht den pH durch Zugabe von 1n NaOH auf 8,5 und gibt, innerhalb einer Stunde, gleichzeitig 19 g Na-Wasserglas (26,5% $SiO_2$), in 300 ml Wasser verdünnt (= 5 % $SiO_2$ bezogen auf Pigment), und 45 ml 0,2M $H_2SO_4$, in 100 ml Wasser verdünnt, hinzu. Der pH bleibt bei 8,5-8,7 konstant. Die Suspension wird dann 4 Stunden lang weitergerührt. Nach dem Abkühlen wird abfiltriert, der Rückstand wird mit Wasser gewaschen und in einem Vakuumtrockenschrank bei 80 °C getrocknet.

Beispiel 9: Die zweite Hälfte der gemäss Beispiel 8a) erhaltenen Suspension wird auf 90 °C erwärmt, wobei der pH bei 5,7 liegt. Innerhalb 60 Minuten werden 80 ml einer 2 %igen wässrigen Natriumaluminatlösung (= 1,6 % $Al_2O_3$ bezogen auf Pigment) zugegeben. Durch Zugabe von 0,2M $H_2SO_4$ wird der pH auf 8,5 gehalten. Die Suspension wird bei 90 °C während 3 Stunden weitergerührt. Das Produkt wird schliesslich wie in Beispiel 8b) beschrieben isoliert.

Beispiel 10: 20 g C.I.Pigment Gelb 129 und 4 g Zirkonium-IV-acetylacetonat (= 5 % $ZrO_2$ bezogen auf Pigment) werden in 200 ml Wasser während 4 Stunden mit einem Zahnscheibenrührer dispergiert. Die Suspension wird eine Stunde lang weitergerührt, dann auf 60 °C erwärmt und der pH von 5,6 auf 8,5 erhöht. Während die Suspension 15 Stunden gerührt wird, sinkt der pH auf 5,5. Danach wird die Temperatur auf 90 °C erhöht und der pH auf 9,5 eingestellt. Innerhalb 50 Minuten werden 3,8 g Na-Wasserglas (26,5% $SiO_2$) in 100 ml Wasser verdünnt (= 5 % $SiO_2$ bezogen auf Pigment), hinzugegeben, wobei durch portionenweise Zugabe von insgesamt 17 ml 0,2M $H_2SO_4$ (in 70 ml Wasser verdünnt) der pH auf 9-9,5 gehalten wird. Die Suspension wird während 3 Stunden bei 90 °C weitergerührt, und danach wird das Produkt wie in Beispiel 8b) beschrieben isoliert.

Beispiel 11: Beispiel 10 wird wiederholt, mit der einzigen Ausnahme, dass anstelle von 20 g C.I.Pigment Gelb 129 56 g eines 35,7 %igen wässrigen Presskuchens des γ-Chinacridonpigments C.I.Pigment Violett 19 verwendet werden.

Beispiel 12: 20 g C.I.Pigment Gelb 110 werden wie in Beispiel 4 in 200 ml Isopropanol dispergiert. Innerhalb 30 Minuten werden 3,55 g Titan-IV-isopropylat (= 5 % $TiO_2$ bezogen auf Pigment), in 50 ml Isopropanol gelöst, zugegeben. Nach einer Stunde gibt man 10 ml einer 2 %igen Lösung von Na-Isopropylat in Isopropanol zu. Die Suspension wird auf 70 °C erwärmt und 3 Stunden lang weitergerührt. Man fügt danach 300 ml Wasser hinzu und erwärmt die Suspension auf 78 °C. Der pH wird von 7,0 durch Zugabe von 1 n NaOH auf 9,5 erhöht. Innerhalb einer Stunde gibt man 3,8 g Na-Wasserglas (26,5 % $SiO_2$), in 100 ml Wasser verdünnt (= 5 % $SiO_2$ bezogen auf Pigment), hinzu und hält durch Zugabe von 20 ml 0,2 M $H_2SO_4$, in 100 ml Wasser verdünnt, den pH bei 9-9,5. Die Suspension wird noch 2 Stunden weitergerührt. Nach dem Abkühlen wird das Produkt wie in Beispiel 8b beschrieben isoliert.

Beispiel 13: 20 g C.I. Pigment Gelb 110 werden wie in Beispiel 4 in 200 ml Isopropanol dispergiert. Innerhalb 30 Minuten werden 2,57 g Zinn-IV-dichloro-acetylacetonat (= 5 % $SnO_2$ bezogen auf Pigment), in 100 ml Ethanol gelöst, zugegeben. Nach einer Stunde gibt man 20 ml einer 2 %igen Na-Isopropylatlösung in Isopropanol hinzu. Die Suspension wird auf 70 °C erwärmt und 3 Stunden lang weitergerührt. Dann wird wie in Beispiel 12 beschrieben mit Na-Wasserglas (= 5 % $SiO_2$ bezogen auf Pigment) behandelt und das Produkt isoliert.

Beispiel 14: 20 g C.I. Pigment Gelb 110 werden wie in Beispiel 4 in 200 ml Isopropanol dispergiert. Innerhalb 30 Minuten werden 3,45 g Tetraethoxysilicat (= 5 % $SiO_2$ bezogen auf Pigment), in 100 ml Isopropanol gelöst, zugegeben. Nach einer Stunde gibt man 20 ml einer 2 %igen Lösung von Na-Isopropylat in Isopropanol zu. Die Suspension wird auf 60 °C erwärmt und 3 Stunden lang weitergerührt. Darauf folgen die Behandlung mit Na-Wasserglas (= 5 % $SiO_2$ bezogen auf Pigment) und die Isolierung wie in Beispiel 12 beschrieben.

Beispiel 15: 126 g der gemäss Beispiel 7 erhaltenen Suspension werden auf 90 °C erwärmt. Man erhöht den pH durch Zugabe von 1n NaOH auf 9,5 und gibt innerhalb 70 Minuten gleichezitig 1,9 g Na-Wasserglas (26,5 % $SiO_2$), in 50 ml Wasser verdünnt (= 2,5 % $SiO_2$ bezogen auf Pigment), und 10 ml 0,2 M $H_2SO_4$, in 50 ml Wasser verdünnt, hinzu. Der pH bleibt bei 8,8-9,3 konstant. Die Suspension wird dann 3 Stunden weitergerührt. Das Produkt wird schliesslich wie in Beispiel 8b) beschrieben isoliert.

Beispiel 16: 126 g der gemäss Beispiel 7 erhaltenen Suspension werden auf 85 °C erwärmt, wobei der pH bei 5,8 liegt. Innerhalb 60 Minuten werden gleichzeitig 50 ml einer 2%igen wässrigen Natriumaluminat-Lösung (= 4 % $Al_2O_3$ bezogen auf Pigment) und 50 ml einer 0,2 M $H_2SO_4$ Lösung zugegeben. Der pH bleibt bei ungefähr 6 konstant. Die Suspension wird dann 3 Stunden weitergerührt und das Produkt wird schliesslich wie in Beispiel 8b) beschrieben isoliert.

Beispiel 17: 126 g der gemäss Beispiel 7 erhaltenen Suspension werden auf 60 °C erwärmt. Innerhalb 25 Minuten werden 2 g $Al_2(SO_4)_3 \cdot 18\ H_2O$a (= 1 % $Al_2O_3$ bezogen auf Pigment), in 35 ml Wasser gelöst, hinzugegeben. Der pH sinkt auf 3,3. Dieser wird langsam (innerhalb einer Stunde) durch Zugabe von 140 ml 1n NaOH auf 6,5 erhöht. Die Suspension wird 3 Stunden weitergerührt. Das Produkt wird schliesslich wie in Beispiel 8b) beschrieben isoliert.

Beispiel 18: 126 g der gemäss Beispiel 7 erhaltenen Suspension werden auf 90 °C erwärmt. Man erhöht den pH durch Zugabe von 1n NaOH auf 9,5 und gibt, innerhalb einer Stunde, gleichzeitig 1,14 g Na-Wasserglas (= 1 % $SiO_2$ bezogen auf Pigment), in 50 ml Wasser verdünnt, und 6 ml 0,2 M $H_2SO_4$, in 50 ml Wasser verdünnt, hinzu. Die Suspension wird 40 Minuten gerührt und dann auf 60 °C gekühlt. Der pH wird auf 8,5 eingestellt. Innerhalb 60 Minuten werden gleichzeitig 0,3 g $NaAlO_2$ (= 1,5 % $Al_2O_3$ bezogen auf Pigment), in 50 ml Wasser gelöst, und 11 ml 0,2 M $H_2SO_4$, in 50 ml Wasser verdünnt, zugegeben. Der pH bleibt dabei bei ~ 8,5 konstant. Die Suspension wird 3 1/2 Stunden weitergerührt und das Produkt wird schliesslich wie in Beispiel 8b) beschrieben isoliert.

Beispiel 19: 126 g der gemäss Beispiel 7 erhaltenen Suspension werden auf 60 °C erwärmt. Der pH wird auf 3,0 eingestellt. Innerhalb 75 Minuten werden 50 ml einer 1%igen Lösung von $NaAlO_2$ ( = 1 % $Al_2O_3$ bezogen auf Pigment) zugegeben. Der pH steigt bis 8,5 und wird durch Zugabe von 0,4 M $H_2SO_4$ auf diesem Wert konstant gehalten. Man rührt 30 Minuten weiter, dann stellt man den pH auf 5,7 ein und gibt erneut 50 ml der $NaAlO_2$-Lösung (= 1 % $Al_2O_3$ bezogen auf Pigment) zu, wobei der pH durch Zugabe von 0,4 M $H_2SO_4$ auf 5,7 konstant gehalten wird. Die Suspension wird zwei Stunden weitergerührt. Das Produkt wird schliesslich wie in Beisiel 8b) beschrieben isoliert.

Beispiel 20: 10 g des Diketo-Pyrrolopyrrolpigments CI Pigment Rot 254 werden in 100 ml Isopropanol dispergiert. 0,53 g Zirkonium(IV)-Isopropylat (= 2 % $ZrO_2$ bezogen auf Pigment) werden als Pulver zugegeben. Nach 30 Minuten gibt man 10 ml einer 1,8%-igen Na-Isopropylatlösung in Isopropanol zu. Die Suspension wird auf 75 °C erwärmt und während 6 Stunden weitergerührt. Nach dem Abkühlen wird das Produkt wie in Beispiel 1 beschrieben isoliert.

Beispiel 21: 10 g CI Pigment Rot 254 werden in 100 ml einer Mischung Wasser/Methanol 4:1 dispergiert. 0,800 g Zirkonium(IV)-acetylacetonat (= 2 % $ZrO_2$ bezogen auf Pigment) werden als Pulver zugegeben. Die Suspension wird auf 75 °C erwärmt. Der pH (7,2) wird durch Zugabe von 1 n NaOH auf 8,5 erhöht. Die Suspension wird 3 Stunden gerührt, wobei der pH allmählich auf 7,4 abfällt. Der pH wird wieder auf 8,5 erhöht und die Suspension 3 Stunden weitergerührt. Nach dem Abkühlen wird das Produkt wie in Beispiel 1 beschrieben isoliert.

Beispiel 22: 10 g CI Pigment Gelb 110 werden in 100 ml Isopropanol dispergiert. Innerhalb 10 Minuten werden 1,3 g einer 75%-igen Lösung von Ti(IV)-diisopropoxy-bis-acetylacetonat (= 2 % $TiO_2$ bezogen auf Pigment) in 100 ml i-Propanol verdünnt, zugegeben. Die Suspension wird dann eine Stunde lang gerührt, auf 60 °C erwärmt. Der pH wird durch Zugabe von 1 n NaOH alkalisch eingestellt. Die Suspension wird 4 Stunden weitergerührt. Nach dem Abkühlen wird das Produkt wie in Beispiel 1 beschrieben isoliert.

Beispiel 23: 10 g Pigment Gelb 110 werden in 100 ml Wasser in Anwesenheit von 1 g Zirkonium(IV)-acetylacetonat (= 2,5 % $ZrO_2$ bezogen auf Pigment) dispergiert. Der pH wird durch Zugabe von 1 n NaOH auf 8,5 erhöht. Die Suspension wird 2 $\frac{3}{4}$ Stunden gerührt, wobei der pH allmählich auf 7,2 abfällt. Der pH wird wieder auf 8,5 erhöht und die Suspension 3 Stunden gerührt. Innerhalb 1 Stunde werden gleichzeitig 7,8 g $Al_2(SO_4)_3 \cdot 18H_2O$ (= 12 % $Al_2O_3$ bezogen auf Pigment), in 50 ml Wasser gelöst, und eine 2 N NaOH-Lösung zugesetzt, wobei der pH zuerst auf 6,5 sinkt und dann konstant bleiben soll. Die Suspension wird danach drei Stunden bei 80-90 °C gerührt. Nach dem Abkühlen wird das Produkt filtriert, mit Wasser gewaschen und in einem Vakuumtrockenschrank bei 80 °C getrocknet.

Anwendungsbeispiele 24-33

Zur Bestimmung des Fliessverhaltens werden die in der nachfolgenden Tabelle angegebenen erfindungsgemässen Stoffzusammensetzungen, sowie die entsprechenden unbehandelten Pigmente nach üblicher Methode in ein Alkyd-Lacksystem (®Setal 84, Kunstharzfabriek Synthesis B.V., Holland; Festkörpergehalt: 70 Gew.%) eingearbeitet.

Das Fliessverhalten der Lackanreibungen, welche 9 % Pigment und 40,5 % Gesamtfestkörper enthalten und deren Pigment/Bindemittel-Verhältnis 0,3 beträgt, wird mit einem HAAKE-Viskosimeter ®Rotovisco RV 12 ermittelt (Messtemperatur: 25 °C; Mess-System: SV-SP; Scherbereich: D = 0-100 [1/s]). Zur einfachen Charakterisierung der Fliesskurven können aus optimalen Regressionskurven ermittelte Viskositätswerte bei D = 10 [1/s] und 100 [1/s] angegeben werden.

Niedrigere Werte bedeuten besseres Fliessverhalten.

| Beispiel | Stoffzusammensetzung | Viskositätswerte in mPa•s | |
|---|---|---|---|
| | | bei D=10 [1/s] | bei D=100 [1/s] |
| 24 | C.I. Pigment Gelb 110 + Ti-Isopropylat (Beispiel 4) | 1151 | 198 |
| 25 | C.I. Pigment Gelb 110 + $SnCl_2(acac)_2$[2] (Beispiel 5) | 975 | 229 |
| 26 | C.I. Pigment Gelb 110 + Tetraethoxysilicat (Beispiel 6) | 832 | 168 |
| 27 | C.I. Pigment Rot 255 + $Zr(acac)_4$ (Beispiel 7) | 419 | 97 |
| 28 | C.I. Pigment Gelb 110 + Ti-Isopropylat + $SiO_2$ (Beispiel 12) | 885 | 193 |
| 29 | C.I. Pigment Gelb 110 + $SnCl_2(acac)_2$ + $SiO_2$ (Beispiel 13) | 858 | 162 |
| 30 | C.I. Pigment Gelb 110 +Tetraethoxysilicat + $SiO_2$ (Beispiel 14) | 725 | 158 |
| 31 | C.I. Pigment Rot 255 + $Zr(acac)_4$ + $SiO_2$ (Beispiel 15) | 222 | 81 |
| 32 | C.I. Pigment Rot 255 + $Zr(acac)_4$ + $Al_2O_3$ (Beispiel 16) | 366 | 97 |

[2] acac = Acetylacetonat

| Beispiel | Stoffzusammensetzung | Viskositätswerte in mPa•s | |
|---|---|---|---|
| | | bei D=10 [1/s] | bei D=100 [1/s] |
| 33 | C.I. Pigment Rot 255 + $Zr(acac)_4$ + $SiO_2$ + $Al_2O_3$ (Beispiel 18) | 373 | 96 |

Die entsprechenden unbehandelten Pigmente ergeben die in der nachfolgenden Tabelle angegebenen Viskositätswerte.

| Pigment | Viskositätswerte in mPa.s | |
|---|---|---|
| | bei D = 10[1/s] | bei D = 100[1/s] |
| C.I. Pigment Gelb 110 | 1320 | 297 |
| C.I. Pigment Rot 255 | 448 | 108 |

Anwendungsbeispiele 34-37

Zur Bestimmung des Fliessverhaltens werden die in der nachfolgenden Tabelle angegebenen erfindungsgemässen Stoffzusammensetzungen, sowie die entsprechenden unbehandelten Pigmente nach üblicher Methode in ein Alkyd-Lacksystem (®Setal 84, Kunstharzfabriek Synthesis B.V., Holland; Festkörpergehalt: 70 Gew.%) eingearbeitet.

Das Fliessverhalten der Lackanreibungen, welche 12 % Pigment und 54 % Gesamtfestkörper enthalten und deren Pigment/Bindemittel-Verhältnis 0,3 beträgt, wird mit einem HAAKE-Viskosimeter ®Rotovisco RV 12 ermittelt (Messtemperatur: 25 °C; Mess-System: SV-SP; Scherbereich: D = 0-100 [1/s]). Zur einfachen Charakterisierung der Fliesskurven können aus optimalen Regressionskurven ermittelte Viskositätswerte bei D = 10 [1/s] und 100 [1/s] angegeben werden.

Niedrigere Werte bedeuten besseres Fliessverhalten.

| Beispiel | Stoffzusammensetzung | Viskositätswerte in mPa•s | |
|---|---|---|---|
| | | bei D = 10 [1/s] | bei D = 100 [1/s] |
| 34 | C.I. Pigment Rot 254 + Zr-Isopropylat (Beispiel 20) | 397 | 164 |
| 35 | C.I. Pigment Rot 254 + $Zr(acac)_4$ (Beispiel 21) | 356 | 172 |
| 36 | C.I. Pigment Gelb 110 + $Ti(isopropoxy)_2(acac)_2$ (Beispiel 22) | 1824 | 332 |
| 37 | C.I. Pigment Gelb 110 + $Zr(acac)_4$ + $Al_2O_3$ (Beispiel 23) | 1989 | 440 |

Die entsprechenden unbehandelten Pigmente ergeben die in der nachfolgenden Tabelle angegebenen Viskositätswerte.

| Pigment | Viskositätswerte in mPa.s | |
|---|---|---|
| | bei D = 10[1/s] | bei D = 100[1/s] |
| C.I.Pigment Rot 254 | 663 | 315 |
| C.I.Pigment Gelb 110 | 3782 | 833 |

## Patentansprüche

1. Stoffzusammensetzungen enthaltend ein mit Metalloxiden beschichtetes organisches Pigment, dadurch gekennzeichnet, dass die Teilchenoberfläche des Pigments mit einem festhaftenden, durchgehenden, hochvernetzten Ueberzug aus Silicium- und/oder Aluminiumoxid versehen ist, welches durch Polykondensation eines Silicates und/oder Aluminates mit den freien Hydroxylgruppen einer die Teilchenoberfläche durchgehend umhüllenden Schicht fixiert wird, die im wesentlichen aus partiell hydrolysierten organischen Verbindungen von Elementen der Gruppe 4A oder 4B des Periodensystems, ausgewählt aus der Gruppe bestehend aus Chelaten der Formel

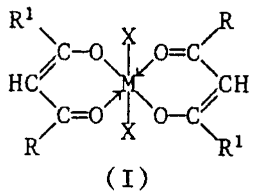
(I)

oder

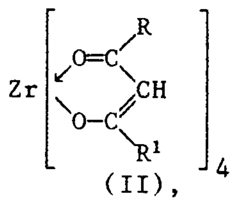
(II),

worin R Methyl, Ethyl, Methoxy oder Ethoxy, $R^1$ Methyl oder Ethyl und X Halogen oder $C_1$-$C_4$-Alkoxy sind und M Ti oder Sn bedeutet, und aus Estern der Formel

$Q(OR^2)_4$ (III) ,

worin Q ein Element der Gruppe 4A oder 4B des Periodensystems und $R^2$ $C_1$-$C_4$-Alkyl bedeuten, besteht.

2. Stoffzusammensetzungen gemäss Anspruch 1, dadurch gekennzeichnet, dass der Ueberzug aus Siliciumoxid besteht.

3. Stoffzusammensetzungen gemäss Anspruch 1, dadurch gekennzeichnet, dass der Ueberzug aus Siliciumoxid besteht und durch Verwendung von Na-Wasserglas erhalten wird.

4. Stoffzusammensetzungen gemäss Anspruch 1, dadurch gekennzeichnet, dass der Ueberzug aus Aluminiumoxid besteht.

5. Stoffzusammensetzungen gemäss Anspruch 1, dadurch gekennzeichnet, dass der Ueberzug aus Aluminiumoxid besteht und durch Verwendung von Natriumaluminat oder Aluminiumsulfat erhalten wird.

6. Stoffzusammensetzungen gemäss Anspruch 1, dadurch gekennzeichnet, dass der Ueberzug aus Silicium- und Aluminiumoxid besteht

7. Stoffzusammensetzungen gemäss Anspruch 1, dadurch gekennzeichnet, dass in den Chelaten der Formeln I und II R Methyl oder Ethoxy und $R^1$ Methyl bedeuten.

8. Stoffzusammensetzungen gemäss Anspruch 1, dadurch gekennzeichnet, dass in den Chelaten der Formel I M Ti und X $C_1$-$C_4$-Alkoxy bedeuten.

9. Stoffzusammensetzungen gemäss Anspruch 1, dadurch gekennzeichnet, dass in den Chelaten der Formel I M Sn und X Chlor bedeuten.

10. Stoffzusammensetzungen gemäss Anspruch 1, dadurch gekennzeichnet, dass in den Estern der Formel III Q Si, Ti oder Zr und $R^2$ Ethyl, n-Propyl, Isopropyl oder n-Butyl bedeuten.

11. Stoffzusammensetzungen gemäss Anspruch 1, dadurch gekennzeichnet, dass als Pigment ein Diketopyrrolopyrrol-, ein Isoindolin-, ein Isoindolinon- oder ein Metallkomplexpigment enthalten ist.

**12.** Stoffzusammensetzungen gemäss Anspruch 1, dadurch gekennzeichnet, dass die Verbindung der Formel I, II oder III in einer Menge von 1 bis 15 Gew.%, jeweils als Oxid berechnet, bezogen auf das Pigment eingesetzt wird.

**13.** Stoffzusammensetzungen gemäss Anspruch 1, dadurch gekennzeichnet, dass Silicium- und/oder Aluminiumoxid in einer Menge von 0,5-50 Gew.%, bezogen auf das Pigment, eingesetzt wird.

**14.** Stoffzusammensetzungen enthaltend ein organisches Pigment, dessen Teilchenoberfläche mit einer durchgehend umhüllenden Schicht überzogen ist, die im wesentlichen aus partiell hydrolysierten organischen Verbindungen von Elementen der Gruppe 4A oder 4B des Periodensystems, ausgewählt aus der Gruppe bestehend aus Chelaten der Formel

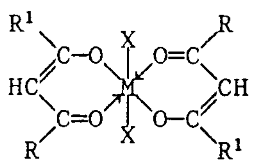

(I)

oder

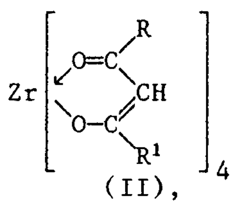

(II),

worin R Methyl, Ethyl, Methoxy oder Ethoxy, $R^1$ Methyl oder Ethyl und X Halogen oder $C_1$-$C_4$-Alkoxy sind und M Ti oder Sn bedeutet, und aus Estern der Formel

$Q(OR^2)_4$ (III) ,

worin Q ein Element der Gruppe 4A oder 4B des Periodensystems und $R^2$ $C_1$-$C_4$-Alkyl bedeuten, besteht.

**15.** Hochmolekulares organisches Material enthaltend eine Stoffzusammensetzung gemäss Anspruch 1.

**16.** Hochmolekulares organisches Material enthaltend eine Stoffzusammensetzung gemäss Anspruch 14.

## Claims

**1.** A composition containing an organic pigment coated with metal oxides, wherein the surface of the pigment particles is provided with a tenacious, dense, highly crosslinked coating of silica and/or alumina which is fixed by polycondensation of a silicate and/or aluminate with the free hydroxyl groups of a layer that densely coats the surface of the particles and which consists substantially of partially hydrolysed organic compounds of elements of group 4A or 4B of the Periodic Table selected from the group consisting of chelates of formula

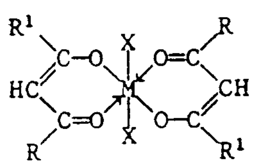

or

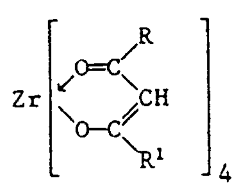

(I)

(II)

in which R is methyl, ethyl, methoxy or ethoxy, $R^1$ is methyl or ethyl and X is halogen or $C_1$-$C_4$alkoxy, and M is Ti or Sn, and of esters of formula

$Q(OR^2)_4$ (III),

in which Q is an element of group 4A or 4B of the Periodic Table and $R^2$ is $C_1$-$C_4$alkyl.

**2.** A composition according to claim 1, wherein the coating consists of silica.

**3.** A composition according to claim 1, wherein the coating consists of silica and is obtained by using sodium silicate.

**4.** A composition according to claim 1, wherein the coating consists of alumina.

**5.** A composition according to claim 1, wherein the coating consists of alumina and is obtained by using sodium aluminate or aluminium sulfate.

**6.** A composition according to claim 1, wherein the coating consists of silica and alumina.

**7.** A composition according to claim 1, wherein, in the chelates of formulae I and II, R is methyl or ethoxy and $R^1$ is methyl.

**8.** A composition according to claim 1, wherein, in the chelates of formula I, M is Ti and X is $C_1$-$C_4$alkoxy.

**9.** A composition according to claim 1, wherein, in the chelates of formula I, M is Sn and X is chlorine.

**10.** A composition according to claim 1, wherein, in the esters of formula III, Q is Si, Ti or Zr and $R^2$ is ethyl, n-propyl, isopropyl or n-butyl.

**11.** A composition according to claim 1, which contains as pigment a diketopyrrolopyrrole pigment, an isoindoline pigment, an isoindolinone pigment or a metal complex pigment.

**12.** A composition according to claim 1, wherein the compound of formula I, II or III is employed in an amount of 1 to 15 % by weight, calculated in each case as oxide, based on the pigment.

**13.** A composition according to claim 1, wherein silica and/or alumina is employed in an amount of 0.5 to 50 % by weight, based on the pigment.

**14.** A composition containing an organic pigment, the surface of the particles of which is coated with a dense layer which consists substantially of partially hydrolysed organic compounds of elements of group 4A or 4B of the Periodic Table selected from the group consisting of chelates of formula

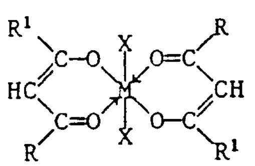

(I)

or

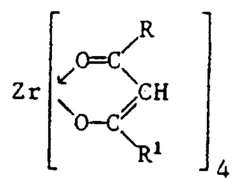

(II),

in which R is methyl, ethyl, methoxy or ethoxy, $R^1$ is methyl or ethyl and X is halogen or $C_1$-$C_4$alkoxy, and M is Ti or Sn, and of esters of formula

$Q(OR^2)_4$ (III),

in which Q is an element of group 4A or 4B of the Periodic Table and $R^2$ is $C_1$-$C_4$alkyl.

**15.** High molecular weight organic material containing a composition according to claim 1.

**16.** High molecular weight organic material containing a composition according to claim 14.

## Revendications

1. Compositions contenant un pigment organique revêtu d'oxydes métalliques, caractérisées en ce que la surface des particules du pigment est munie d'un revêtement très adhérent, continu d'oxyde de silicium et/ou d'aluminium, qui est fixé par polycondensation d'un silicate et/ou d'un aluminate aux groupes hydroxyle libres d'une couche entourant la surface des particules d'une manière continue, qui se compose essentiellement de composés organiques partiellement hydrolysés d'éléments des groupes 4A ou 4B de la Classification Périodique, choisis parmi des chélates répondant aux formules :

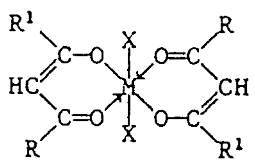

(I)

ou

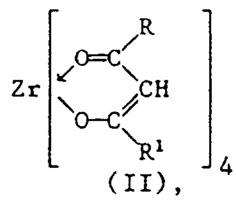

(II),

dans lesquelles R désigne un groupe méthyle, éthyle, méthoxy ou éthoxy, $R^1$ désigne un groupe méthyle ou éthyle et X est un atome d'halogène ou un groupe alcoxy en $C_1$-$C_4$, et M désigne Ti ou Sn, et d'esters répondant à la formule :

$Q(OR^2)_4$ (III)

dans laquelle Q désigne un élément des groupes 4A ou 4B de la Classification Périodique et $R^2$ désigne un groupe alkyle en $C_1$-$C_4$.

2. Compositions selon la revendication 1, caractérisées en ce que le revêtement se compose d'oxyde de silicium.

3. Compositions selon la revendication 1, caractérisées en ce que le revêtement se compose d'oxyde de silicium et est obtenu en utilisant du silicate de sodium.

4. Compositions selon la revendication 1, caractérisées en ce que le revêtement se compose d'oxyde d'aluminium.

5. Compositions selon la revendication 1, caractérisées en ce que le revêtement se compose d'oxyde d'aluminium et est obtenu en utilisant de l'aluminate de sodium ou du sulfate d'aluminium.

6. Compositions selon la revendication 1, caractérisées en ce que le revêtement se compose d'oxyde de silicium et d'aluminium.

7. Compositions selon la revendication 1, caractérisées en ce que dans les chélates répondant aux formules I et II, R désigne un groupe méthyle ou éthoxy et $R^1$ un groupe méthyle.

8. Compositions selon la revendication 1, caractérisées en ce que dans les chélates répondant à la formule I, M désigne Ti et X un groupe alcoxy en $C_1$-$C_4$.

9. Compositions selon la revendication 1, caractérisées en ce que dans les chélates répondant à la formule I, M désigne Sn et X un atome de chlore.

10. Compositions selon la revendication 1, caractérisées en ce que dans les esters répondant à la formule III, Q désigne Si, Ti ou Zr et $R^2$ désigne un groupe éthyle, n-propyle, isopropyle ou n-butyle.

11. Compositions selon la revendication 1, caractérisées en ce que le pigment qu'elles contiennent est un pigment de dicéto-pyrrolopyrrole, un pigment d'isoindoline, un pigment d'isoindolinone ou un pigment à complexe métallique.

**12.** Compositions selon la revendication 1, caractérisées en ce que le composé répondant aux formules I, II ou III est utilisé dans une quantité de 1 à 15 % en poids, calculée en oxyde, par rapport au pigment.

**13.** Compositions selon la revendication 1, caractérisées en ce que l'oxyde de silicium et/ou d'aluminium est utilisé dans une quantité de 0,5 à 50 % en poids par rapport au pigment.

**14.** Compositions contenant un pigment organique dont la surface des particules est revêtue d'une couche enveloppante continue qui se compose essentiellement de composés organiques partiellement hydrolysés d'éléments des groupes 4A ou 4B de la Classification Périodique, choisis parmi les chélates répondant aux formules :

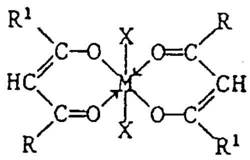

(I)

ou

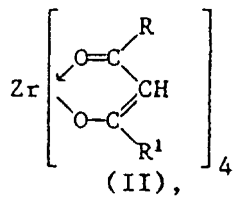

(II),

dans lesquelles R désigne un groupe méthyle, éthyle, méthoxy ou éthoxy, $R^1$ désigne un groupe méthyle ou éthyle et X est un atome d'halogène ou un groupe alcoxy en $C_1$-$C_4$, et M désigne Ti ou Sn, et d'esters répondant à la formule :

$Q(OR^2)_4$ (III)

dans laquelle Q désigne un élément des groupes 4A ou 4B de la Classification Périodique et $R^2$ désigne un groupe alkyle en $C_1$-$C_4$.

**15.** Matière organique de masse moléculaire élevée contenant une composition conforme à la revendication 1.

**16.** Matière organique de masse moléculaire élevée contenant une composition conforme à la revendication 14.